# FASCICULE DE BREVET EUROPEEN

(11) **EP 1 120 183 B1**
(45) Date de publication et mention de la délivrance du brevet: **21.05.2008**
(21) Numéro de dépôt: 01470002.5
(22) Date de dépôt: 22.01.2001
(51) Int. Cl.: B28D 1/08, B23D 57/00

(54) **Cale destinée à être insérée dans une fente de coupe**
Zwischenplatte zum Einsetzen in einem Schneidschlitz
Shim to be inserted in a cutting groove

(30) Priorité: 24.01.2000 FR 0000822; 24.01.2000 FR 0000823
(43) Date de publication de la demande: 01.08.2001
(73) Titulaire: Graniterie Petitjean SAS, 88250 La Bresse (FR)
(72) Inventeur: PetitJean, Jean-Paul, 88250 La Bresse (FR)
(74) Mandataire: Poupon, Michel

(56) Documents cités:
- WO-A-99/29456
- DE-A- 2 747 068
- DE-A- 19 722 123
- FI-B- 101 410
- FR-A- 2 625 244
- US-A- 4 713 922
- US-A- 5 605 141

## Description

La présente invention se rapporte au domaine du sciage de bloc de pierre et plus particulièrement à un procédé de sciage horizontal d'un bloc de pierre selon le préambule de la revendication indépendante 1 et à un dispositif de sciage horizontal d'un bloc de pierre selon le préambule de la revendication indépendante 4.

Un tel procédé et un tel dispositif sont décrits dans le document WO99/29456.

En effet, lorsque l'on procède au sciage d'un bloc de pierre selon l'horizontale, il est impératif de procéder à l'insertion de cales dans la fente de coupe, afin que la partie supérieure du bloc de pierre ne gêne pas la progression du fil de coupe.

Lorsque l'on cherche à automatiser le sciage horizontal de blocs de pierre, il convient d'élaborer un automate qui gère l'avancée du fil de coupe et un automate - éventuellement le même - qui gère l'insertion des cales dans la fente de coupe comme par exemple dans les documents WO 99/29456 et DE 197 22 123.

Or, il se trouve qu'au fur et à mesure du sciage, le fil de coupe s'use et que son épaisseur diminue de quelques dixièmes de millimètres.

Il s'ensuit que la fente de coupe ne présente pas la même épaisseur lorsque le fil de coupe est neuf et lorsqu'il est usagé et par conséquent, que les cales doivent présenter des épaisseurs différentes selon l'usure du fil de coupe de manière a toujours bien s'insérer dans la fente de coupe.

Pour automatiser l'insertion des cales d'épaisseur différentes dans la fente de coupe, une solution consiste à disposer dans le magasin de l'automate, des cales présentant une épaisseur variant en fonction de l'épaisseur du fil de coupe, mais cela complique énormément la gestion de l'automatisation.

Par ailleurs, on connaît dans les domaines du bâtiment et de la menuiserie, des dispositifs de calage décrits dans les documents US-A-4-713 922 ; FR-A-2 625 244; FI 101 410 B qui sont formés de deux coins coulissants l'un sur l'autre de manière à pouvoir régler leur épaisseur totale pour rattraper des jeux ou servir de moyen de réglage de l'horizontalité d'un plancher ou de la verticalité d'un bâti. Une fois le réglage de l'épaisseur totale, effectué manuellement, celui-ci, n'est plus modifié.

Pour l'application au domaine du sciage de pierre, il faut automatiser l'adaptation de l'épaisseur de la cale, et la modifier au cours du sciage, pour tenir compte des variations de l'épaisseur de la fente au cours du travail, un tel procédé n'est pas connu de l'art antérieur.

La présente invention entend remédier aux inconvénients de l'art antérieur en proposant un procédé de sciage horizontal d'un bloc de pierre disposé sur un bâti fixe, à l'aide d'un fil de coupe, unique, monté sur des moyens de sciage mobiles horizontalement et verticalement sur le bâti, du type comportant une étape d'insertion de cales dans la fente de coupe par des moyens d'insertion, caractérisé en ce qu'on insère dans ladite fente de coupe des cales d'épaisseur automatiquement ajustable à la largeur de la fente de coupe au cours de sciage, lesdites cales étant réalisées en deux parties, comportant des moyens leur permettant de glisser l'une sur l'autre, de manière à réaliser une cale double dont l'épaisseur totale peut varier entre une valeur d'épaisseur maximale et une valeur d'épaisseur minimale, ladite valeur d'épaisseur maximale correspondant à la largeur de la fente de coupe produite par un fil de coupe neuf, ladite valeur d'épaisseur minimale correspondant à la largeur de la fente de coupe produite par ledit fil de coupe usagé, lesdits moyens étant constitués de deux plans de glissement à pentes complémentaires, ménagés respectivement sur la première partie et la deuxième partie, la deuxième partie pénétrant dans la première partie et étant guidée dans son coulissement dans le sens longitudinal de la cale par des bords en forme de queue d'aronde, lesdits bords coopérant avec des formes complémentaire en queue d'aronde prévues dans la partie, et dont les bords latéraux sont inclinés d'un angle (α) par rapport au plan de base de la cale.

Avantageusement, les moyens qui permettent aux parties de glisser l'une par rapport à l'autre, permettent un ajustement automatique de l'épaisseur de la cale double, grâce aux forces disponibles lors de l'insertion, et permettent que les cales s'insèrent toujours parfaitement dans la fente de coupe.

Ainsi, l'automatisation de l'insertion des cales dans la fente de coupe ne requiert qu'un seul type de cales et ne nécessite pas d'opération de triage des cales avant de les disposer dans le magasin du dispositif d'insertion.

Suivant quelques dispositions intéressantes de l'invention :
- lesdits moyens sont constitués de deux pentes complémentaires, ménagées respectivement sur les deux parties, sans exercer aucun effort d'écartement et sans aucune pression dans la fente de coupe ;
- lesdits moyens se présentent sous la forme de deux queues d'aronde complémentaires ;
- de préférence la première partie comporte des bords latéraux présentant, au moins partiellement, en coupe, une forme de V, garantissant la prise de la cale ainsi que son engagement dans la fente de coupe.

Selon une caractéristique préférée, l'insertion desdites cales est opérée régulièrement, pendant un arrêt momentané de l'avancement A des moyens de sciage.

Selon une autre caractéristique préférée, pendant l'opération d'insertion des cales, deux cales sont insérées simultanément dans la fente de coupe, chaque cale étant insérée respectivement de chaque côté dudit bloc de pierre par les moyens d'insertion.

La présente invention propose aussi un dispositif de sciage horizontal d'un bloc de pierre disposé sur un bâti fixe du type comportant un fil de coupe, unique, monté sur des moyens de sciage mobiles horizontalement et verticalement sur le bâti, les moyens de sciage étant composés au moins d'un volant d'entraînement entraîné en rotation par un moteur et d'un volant de retour, chargés d'entraîner en rotation R le fil de coupe et des moyens d'insertion de cales dans la fente de coupe comportant chacun au moins un magasin de cales, les moyens de sciage et les moyens d'insertion sont solidaires et sont disposés mobiles verticalement sur un support vertical, mobile horizontalement par rapport au bâti, caractérisé en ce que chaque magasin de cales contient des cales d'épaisseur variable pour la mise en oeuvre du procédé énoncé ci-dessus et caractérisé en ce que les moyens d'insertion desdites cales comportent chacun un bras mobile par rapport au magasin, à l'extrémité duquel est positionné un doigt de préhension mobile chargé de prendre les cales, le bras comportant en outre, à son extrémité, un vérin de calage de la cale pour tendre la cale dans la fente de coupe.

Suivant quelques dispositions intéressantes du dispositif selon l'invention:
- les moyens d'insertion desdites cales comportent chacun un bras mobile par rapport au magasin, à l'extrémité duquel est positionné un doigt de préhension mobile, chargé de prendre les cales ;
- le bras comporte en outre, à son extrémité, un vérin de calage de la cale permettant d'adapter ladite cale à la valeur de la fente.

De préférence, le magasin est composé d'un boîtier à cale, mobile verticalement sur une glissière verticale et d'une butée basse, fixe.

On comprendra mieux l'invention à l'aide de la description faite ci-après d'un mode de mise en oeuvre donné à titre d'exemple non limitatif, en référence aux figures annexées dans lesquelles
la figure 1 illustre une cale, vue de face et en position d'épaisseur minimale,
la figure 2 illustre la cale, vue de côté et en position d'épaisseur minimale,
la figure 3 illustre la cale, vue en bout et en position d'épaisseur minimale.
la figure 4 illustre la première partie de la cale, vue de face ;
la figure 5 illustre la première partie de la cale, vue de côté;
la figure 6 illustre la première partie de la cale, vue en bout ;
la figure 7 illustre une vue en perspective et partielle du dispositif selon l'invention;
la figure 8 illustre une vue partielle, de face, des moyens d'insertion ; et
la figure 9 illustre une vue partielle, de dessus, des moyens d'insertion.

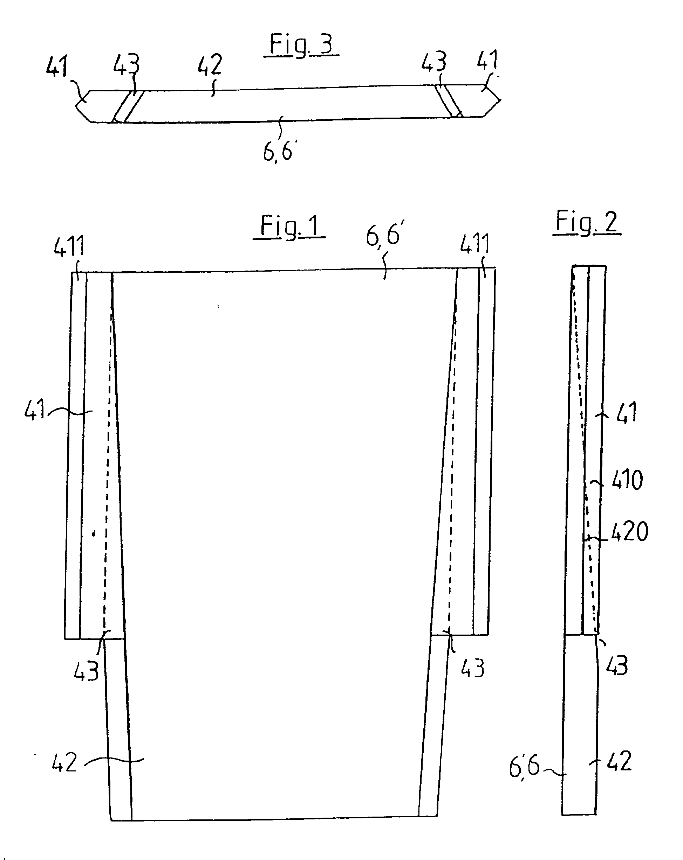

La cale illustrée aux figures 1, 2 et 3, est une cale (6, 6') destinée à être insérée dans une fente de coupe, et elle est caractérisée en ce qu'elle est réalisée en deux parties (42, 42), les deux parties (41, 42) comportant des moyens (43) leur permettant de glisser l'une sur l'autre, de manière à réaliser une cale (6, 6') double dont l'épaisseur totale peut varier entre une valeur d'épaisseur maximale et une valeur d'épaisseur minimale et s'adapter automatiquement à l'espace disponible dans la fente de coupe lors de l'insertion.

Ladite valeur d'épaisseur maximale de la cale (6, 6') correspond à l'épaisseur d'un fil de coupe neuf et ladite valeur d'épaisseur minimale correspond à l'épaisseur dudit fil de coupe usagé.

Ainsi, les cales (6, 6') s'insèrent automatiquement et parfaitement dans la fente de coupe, en toutes circonstances.

Dans la pratique, la valeur d'épaisseur maximale de la cale (6, 6') peut être, par exemple, de 11 millimètres, et la valeur d'épaisseur minimale de la cale (6, 6') peut être de 9 millimètres.

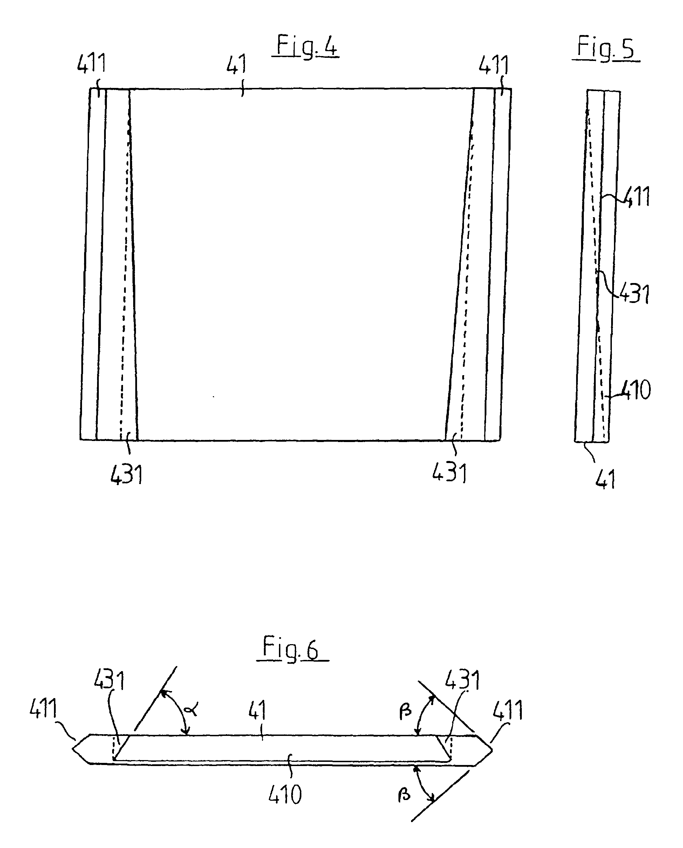

Lesdits moyens (43) sont constitués de deux pentes complémentaires (410, 420), ménagées respectivement sur les parties (41, 42) et ils se présentent sous la forme de deux queues d'aronde complémentaires. La forme en queue d'aronde de la partie (41) est illustrée figure 4 et 5.

Les formes en queues d'aronde complémentaires présentent en outre des bords latéraux (431) orientés d'un angle α proche de 60°, comme illustré figure 6, de manière à faciliter la pénétration de la partie (42) dans la partie (41) et l'ajustement de l'épaisseur de la cale (6, 6') double.

De plus, la première partie (41) comporte des bords latéraux (411) présentant, au moins partiellement, en coupe, une forme de V, afin de faciliter l'insertion de la cale double dans la fente de coupe par l'automate d'insertion des cales. La forme en V peut présenter, par exemple, des angles β proches de 45°.

En outre, les parties (41, 42) constitutives de la cale (6, 6') double sont réalisées dans un matériau plastique résistant, comme, par exemple, le polyéthylène.

Le procédé selon l'invention, est un procédé de sciage horizontal du bloc de pierre (1) disposé sur un bâti (2) fixe, à l'aide d'un fil de coupe (3), du type fil diamanté, unique, monté sur des moyens de sciage (4) mobiles horizontalement et verticalement sur le bâti (2), du type comportant une étape d'insertion de cales (6, 6'), telles que décrites ci-dessus, dans la fente de coupe (7) par des moyens d'insertion (5, 5'). De préférence l'insertion desdites cales (6, 6') est opérée régulièrement, pendant un arrêt momentané de l'avancement A des moyens de sciage (4).

En effet, pour réaliser une coupe horizontale dans un bloc de pierre (1), il est absolument nécessaire de procéder à l'insertion de cale (6, 6') dans la fente de coupe (7) afin que le fil de coupe puisse continuer sa progression et ne pas être écrasé, mais cette insertion qui doit avoir pour effet de maintenir toute la partie du bloc de pierre (1) située au-dessus de la fente de coupe (7), nécessite une certaine force et elle induit souvent des perturbations dans le positionnement du fil diamanté (3).

Il est donc nécessaire de procéder à l'insertion desdites cales (6, 6'), régulièrement, pendant un arrêt momentané de l'avancement A des moyens de sciage (4).

De plus, il est préférable pendant l'opération d'insertion des cales, d'insérer deux cales (6, 6') simultanément dans la fente de coupe (7), chaque cale (6, 6') étant insérée respectivement de chaque côté dudit bloc de pierre (1) par les moyens d'insertion (5, 5').

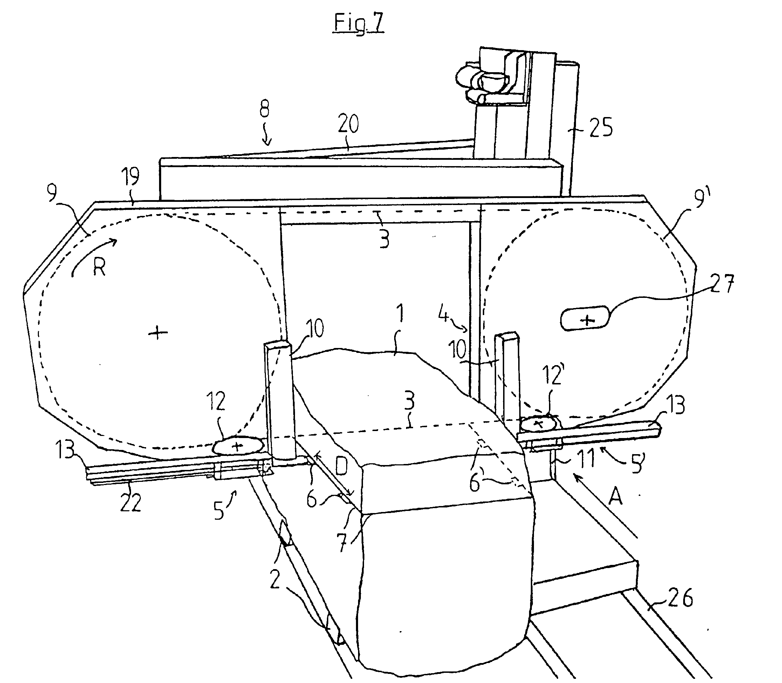

La présente invention se rapporte également à un dispositif (8), illustré figure 7, de sciage horizontal d'un bloc de pierre (1).

Dans ce dispositif (8), les moyens de sciage (4) sont composés au moins d'un volant d'entraînement (9) circulaire entraîné en rotation R par un moteur et d'un volant de retour (9') circulaire, chargés d'entraîner en rotation le fil diamanté (3) et les moyens d'insertion (5, 5') comportent chacun au moins un magasin (10).

Les moyens de sciage (4) et les moyens d'insertion (5, 5') sont solidaires grâce à un ensemble de poutres (20) et sont disposés mobiles verticalement sur un support vertical (11) grâce à des glissières verticales (25), ledit support vertical (11) étant mobile horizontalement par rapport au bâti (2) sur des rails (26) horizontaux, solidaires du bâti (2).

Ainsi, la position exacte du fil de coupe (3) est programmable avec précision grâce à un automate chargé de gérer la position et la vitesse de progression des moyens de sciage (4) et des moyens d'insertion (5, 5') par rapport au support vertical (11) et de gérer la position du support vertical (11) par rapport au bâti (2) fixe.

Dans une version préférée de l'invention, au moins un volant-guide (12,12') circulaire est disposé entre le volant d'entraînement (9) et la fente de coupe (7) et / ou entre la fente de coupe (7) et le volant de retour (9')

Ainsi, lorsque deux volants-guides (12,12') sont disposés de chaque côté latéral de la fente de coupe (7), le fil de coupe (3) est guidé avec précision à son entrée dans le bloc de pierre (1) et à sa sortie du bloc de pierre (1).

Pour une meilleure efficacité des volants-guides (12,12'), il est préférable de disposer l'axe de chaque volant-guide (12,12') verticalement, solidaire des moyens d'insertion (5, 5') et des moyens de sciage (4).

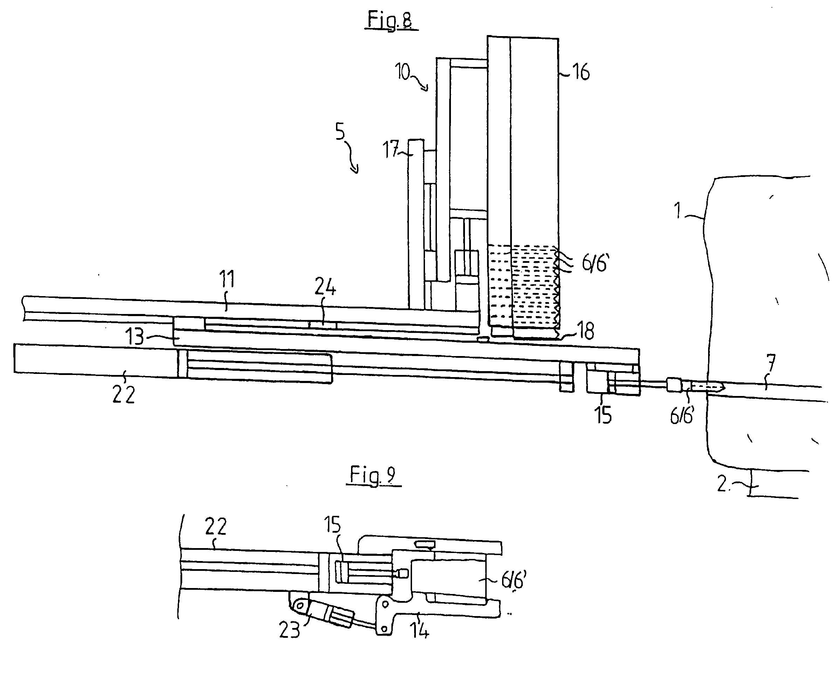

Les moyens d'insertion (5, 5') comportent chacun un bras (13) mobile par rapport au magasin (10), à l'extrémité duquel est positionné un doigt de préhension (14) mobile, chargé de prendre les cales (6, 6') à l'extrémité inférieure du magasin (10), comme illustré figures 8 et 9.

Pour plus de clarté, le doigt de préhension (14) n'a pas été représenté sur la figure 8

Le bras (13) comporte en outre, à son extrémité, un vérin de calage (15) destiné à finir d'insérer et bloquer les cales (6, 6') dans la fente de coupe (7), afin d'empêcher tout mouvement d'affaissement de la partie supérieure du bloc de pierre (1).

Le magasin (10) est composé d'un boîtier à cale (16), mobile verticalement sur une glissière verticale (17) et d'une butée basse (18), fixe.

Les moyens de sciage (4), composés au moins du volant d'entraînement (9), du volant de retour (9') et du fil de coupe (3) sont disposés dans un carter de protection (19), comme illustré figure 7.

Pour une meilleure compréhension de l'invention, une description d'un exemple de mise en oeuvre du dispositif selon l'invention est donnée ci-après.

Pour procéder au découpage du bloc de pierre (1), le fil de coupe (3) commence à découper le bloc de pierre horizontalement.

Au fur et à mesure du sciage, l'avancement A est stoppé régulièrement, afin de procéder à l'insertion d'une cale (6, 6') de chaque côté du bloc de pierre (1), dans la fente de coupe (7). La distance D entre deux cales, d'un même côté du bloc de pierre, est programmée en fonction de la largeur du bloc de pierre.

A chaque cycle de positionnement de cales, l'avancement A étant arrêté, le bras (13), actionné par le vérin pneumatique à double effet (22) avance en coulissant sur un élément horizontal du support vertical (11) et provoque l'incrustation de la cale (6, 6') dans la fente de coupe (7).

Dès que la pression dans le vérin pneumatique à double effet (22) est suffisante, le vérin de calage (15) tend la cale (6, 6') dans la fente de coupe (7).

Lorsque la tension de pression dans le vérin de calage (15) est atteinte, le doigt de préhension (14) s'écarte, grâce au vérin (23) et le bras (13) recule en position arrière.

Lorsque le vérin pneumatique à double effet (22) du bras (13) arrive en contact avec le détecteur de position arrière, le magasin (10) descend de la hauteur d'une cale (6, 6'), en butée basse (18), grâce à la glissière verticale (17).

Ensuite, le bras (13) avance en butée intermédiaire (24), doigt de préhension (14) toujours ouvert.

Ainsi, il ne reste plus qu'à provoquer la fermeture du doigt de préhension (14) sur la nouvelle cale (6, 6'), à reculer légèrement le bras (13) et à remonter le magasin (10), afin de préparer le bras (13) pour le prochain cycle d'insertion.

Le sciage peut alors reprendre son avancement A.

On comprend que la cale telle que décrite ci-dessus permet sans intervention manuelle de couper notamment du granite en tranche de différentes épaisseurs.

## Revendications

1. Procédé de sciage horizontal d'un bloc de pierre (1) disposé sur un bâti (2) fixe, à l'aide d'un fil de coupe (3), unique, monté sur des moyens de sciage (4) mobiles horizontalement et verticalement sur le bâti (2), du type comportant une étape d'insertion de cales (6, 6') dans la fente de coupe (7) par des moyens d'insertion (5, 5'), **caractérisé en ce qu'**on insère dans ladite fente de coupe des cales (6, 6') d'épaisseur automatiquement ajustable à la largeur de la fente de coupe au cours de sciage, lesdites cales étant réalisées en deux parties (41, 42), comportant des moyens (43) leur permettant de glisser l'une sur l'autre, de manière à réaliser une cale (6, 6') double dont l'épaisseur totale peut varier entre une valeur d'épaisseur maximale et une valeur d'épaisseur minimale, ladite valeur d'épaisseur maximale correspondant à la largeur de la fente de coupe produite par un fil de coupe neuf, ladite valeur d'épaisseur minimale correspondant à la largeur de la fente de coupe produite par ledit fil de coupe usagé, lesdits moyens (43) étant constitués de deux plans de glissement à pentes complémentaires (410, 420), ménagés respectivement sur la première partie (41) et la deuxième partie (42), la deuxième partie (42) pénétrant dans la première partie (41) et étant guidée dans son coulissement dans le sens longitudinal de la cale par des bords en forme de queue d aronde, lesdits bords coopérant avec des formes complémentaires en queue d'aronde prévues dans la première partie (41), et dont les bords latéraux (431) sont inclinés d'un angle (α) par rapport au plan de base de la cale (6, 6').

2. Procédé de sciage horizontal d'un bloc de pierre (1) selon la revendication 1, **caractérisé en ce que** l'insertion desdites cales (6, 6') est opérée régulièrement, pendant un arrêt momentané de l'avancement A des moyens de sciage (4).

3. Procédé de sciage horizontal d'un bloc de pierre (1) selon la revendication 2, **caractérise en ce que** pendant l'opération d'insertion des cales, deux cales (6, 6') sont insérées simultanément dans la fente de coupe (7), chaque cale (6, 6') étant insérée respectivement de chaque côté dudit bloc de pierre (1) par les moyens d'insertion (5, 5').

4. Dispositif (8) de sciage horizontal d'un bloc de pierre (1) disposé sur un bâti (2) fixe du type comportant un fil de coupe (3), unique, monté sur des moyens de sciage (4) mobiles horizontalement et verticalement sur le bâti (2), les moyens de sciage (4) étant composés au moins d'un volant d'entraînement (9) entraîné en rotation par un moteur et d'un volant de retour (9'), chargés d'entraîner en rotation R le fil de coupe (3) et des moyens d'insertion (5, 5') de cales dans la fente de coupe comportant chacun au moins un magasin de cales (10), les moyens de sciage (4) et les moyens d'insertion (5, 5') sont solidaires et sont disposés mobiles verticalement sur un support vertical (11), mobile horizontalement par rapport au bâti (2), **caractérisé en ce que** chaque magasin de cales (10) contient des cales d'épaisseur variable pour la mise en oeuvre du procédé selon l'une des revendications 1 à 3 et **caractérisé en ce que** les moyens d'insertion (5, 5') desdites cales comportent chacun un bras (13) mobile par rapport au magasin (10), à l'extrémité duquel est positionné un doigt de préhension (14) mobile, chargé de prendre les cales (6, 6'), le bras (13) comportant en outre, à son extrémité, un vérin de calage (15) de la cale pour tendre la cale (6, 6') dans la fente de coupe (7).

5. Dispositif (8) selon la revendication 7, **caractérisé en ce que** le magasin (10) est composé d'un boîtier à cales (16), mobile verticalement sur une glissière verticale (17) et d'une butée basse (18), fixe.

## Claims

1. Process of horizontal sawing of a block of stone (1) arranged on a fixed frame (2), by means of a single cutting wire (3) mounted on sawing means (4), which are horizontally and vertically moveable on the frame (2), of the type comprising a stage for inserting chocks (6 and 6') into the cutting slot (7) by insertion means (5 and 5'), **characterized in that** chocks (6 and 6'), of a thickness automatically adjustable to the width of the cutting slot during sawing, are inserted into the said cutting slot, the said chocks being made in two parts (41 and 42), comprising means (43) with which they are able to slide over each other, so as to make a double chock (6 or 6'), the total thickness of which can vary between a maximum thickness value and a minimum thickness value, the said maximum thickness value corresponding to the width of the cutting slot produced by a new cutting wire and the said minimum thickness value corresponding to the width of the cutting slot produced by the said cutting wire when worn, the said means (43) being formed from two sliding planes with complementary slopes (410 and 420), provided on the first part (41) and the second part (42) respectively, the second part (42) penetrating into the first part (41) and being guided in its sliding motion in the longitudinal direction of the chock by dovetail-shaped edges, the said edges co-operating with complementary dovetail shapes provided in the first part (41) and the side edges (431) of which are inclined at an angle (α) relative to the base plane of the chock (6 or 6').

2. Process of horizontal sawing of a block of stone (1) according to claim 1, **characterized in that** the insertion of the said chocks (6 and 6') is carried out regularly during a momentary stoppage of the advance A of the sawing means (4).

3. Process of horizontal sawing of a block of stone (1) according to claim 2, **characterized in that**, during the chock insertion operation, two chocks (6 and 6') are inserted simultaneously into the cutting slot (7), each chock (6 or 6') being inserted respectively from each side of the said block of stone (1) by the insertion means (5 and 5').

4. Device (8) for horizontal sawing of a block of stone (1) arranged on a fixed frame (2) of the type comprising a single cutting wire (3), mounted on sawing means (4), which are horizontally and vertically moveable on the frame (2), the sawing means (4) consisting of at least one driving flywheel (9) driven in rotary motion by a motor and of a return flywheel (9'), these having the function of driving in rotation R the cutting wire (3) and the means (5 and 5') of inserting chocks into the cutting slot, each comprising at least one chock magazine (10), the sawing means (4) and insertion means (5 and 5') are rigidly locked together and arranged so as to be vertically moveable on a vertical support (11), moveable horizontally relative to the frame (2), **characterized in that** each chock magazine (10) contains chocks of varying thickness for using the process according to one of claims 1 to 3 and **characterized in that** the means (5 and 5') of inserting the said chocks each comprise an arm (13) which is moveable relative to the magazine (10), at the end of which is positioned a moveable gripping finger (14), having the function of taking the chocks (6 and 6'), the arm (13) also comprising, at its end, a chock adjustment jack (15) for holding the chock (6 or 6') in the cutting slot (7).

5. Device (8) according to claim 7, **characterized in that** the magazine (10) consists of a chock case (16), which is vertically moveable on a vertical slide (17), and of a fixed bottom stop (18).

## Patentansprüche

1. Verfahren zum horizontalen Sägen eines Steinblocks (1), der auf einem stationären Gestell (2) angeordnet ist, mit Hilfe eines einzigen Schneiddrahts (3), der auf Sägemittel (4) montiert ist, die horizontal und vertikal auf dem Gestell (2) beweglich sind, wobei das Verfahren von der Art ist, das einen Schritt des Einsetzens von Keilen (6, 6') in den Schneidschlitz (7) durch Einsetzmittel (5, 5') aufweist, **dadurch gekennzeichnet, dass** man in den Schneidschlitz Keile (6, 6') mit einer Stärke einsetzt, die automatisch beim Sägen an die Höhe des Schneidschlitzes anpassbar ist, wobei die Keile aus zwei Teilen (41, 42) bestehen, die Mittel (43) aufweisen, die es ihnen erlauben, derart aufeinander zu gleiten, dass ein Doppelkeil (6, 6') hergestellt wird, dessen Gesamtstärke zwischen einem maximalen Stärkenwert und einem minimalen Stärkenwert variieren kann, wobei der maximale Stärkenwert der Höhe des Schneidschlitzes entspricht, der von einem neuen Schneiddraht erzeugt wird, wobei der minimale Stärkenwert der Höhe des Schneidschlitzes entspricht, der von dem verschlissenen Schneiddraht erzeugt wird, wobei die Mittel (43) aus zwei Gleitebenen mit komplementären Neigungen (410, 420) bestehen, die jeweils auf dem ersten Teil (41) und dem zweiten Teil (42) vorhanden sind, wobei der zweite Teil (42) in den ersten Teil (41) eindringt und bei seinem Gleiten in die Längsrichtung des Keils von Rändern in Schwalbenschwanzform geführt wird, wobei die Ränder mit komplementären Schwalbenschwanzformen, die in dem ersten Teil (41) vorgesehen sind, zusammenwirken, und deren Seitenränder (431) um einen Winkel (α) in Bezug auf die Basis des Keils (6, 6') geneigt sind.

2. Verfahren zum horizontalen Sägen eines Steinblocks (1) nach Anspruch 1, **dadurch gekennzeichnet, dass** das Einsetzen der Keile (6, 6') in regelmäßigen Abständen während eines vorübergehenden Stillstands des Vorlaufs A der Sägemittel (4) ausgeführt wird.

3. Verfahren zum horizontalen Sägen eines Steinblocks (1) nach Anspruch 2, **dadurch gekennzeichnet, dass** während des Einsetzvorgangs der Keile zwei Keile (6, 6') gleichzeitig in den Schneidschlitz (7) eingesetzt werden, wobei jeder Keil (6, 6') jeweils von jeder Seite des Steinblocks (1) durch die Einsetzmittel (5, 5') eingesetzt wird.

4. Vorrichtung (8) zum horizontalen Sägen eines Steinblocks (1), der auf einem stationären Gestell (2) des Typs angeordnet ist, der einen einzigen Schneiddraht (3) aufweist, der auf horizontal und vertikal auf dem Gestell (2) beweglichen Sägemitteln (4) installiert ist, wobei die Sägemittel (4) aus mindestens einem Antriebsrad (9), das in Rotation von einem Motor angetrieben wird, und einem Rücklaufrad (9') bestehen, deren Aufgabe darin besteht, den Schneiddraht (3) in Rotation R anzutreiben, und aus Einsetzmitteln (5, 5') für Keile in den Schneidschlitz, die jeweils mindestens ein Keilemagazin (10) aufweisen, wobei die Sägemittel (4) und die Einsetzmittel (5, 5') fest verbunden sind und senkrecht beweglich auf einem senkrechten Träger (11) angeordnet sind, horizontal beweglich zu dem Gestell (2), **dadurch gekennzeichnet, dass** jedes Keilemagazin (10) Keile mit variabler Stärke zum Umsetzen des Verfahrens nach einem der Ansprüche 1 bis 3 enthält, und **dadurch gekennzeichnet, dass** die Einsetzmittel (5, 5') der Keile jeweils einen Arm (13) aufweisen, der zu dem Magazin (10) beweglich ist, an dessen Ende ein beweglicher Greiffinger (14) positioniert ist, der die Keile (6, 6') aufnimmt, wobei der Arm (13) ferner an seinem Ende einen Verkeilungszylinder (15) des Keils aufweist, um den Keil (6, 6') in den Schneidschlitz (7) zu drücken.

5. Vorrichtung (8) nach Anspruch 7, **dadurch gekennzeichnet, dass** das Magazin (10) aus einem Keilegehäuse (16), das senkrecht auf einer senkrechten Gleitschiene (17) beweglich ist, und aus einem stationären unteren Anschlag (18), besteht.
